# EUROPÄISCHE PATENTSCHRIFT

(11) **EP 2 565 000 B1**
(45) Veröffentlichungstag und Bekanntmachung des Hinweises auf die Patenterteilung: **12.10.2016**
(21) Anmeldenummer: 12180284.7
(22) Anmeldetag: 13.08.2012
(51) Int. Cl.: B27B 25/04, B65G 15/60, B27C 1/12, B23Q 7/03, B65G 21/20

(54) **Holzbearbeitungsanlage**
Wood-working machine
Machine de travail du bois

(30) Priorität: 27.08.2011 DE 202011105077 U
(43) Veröffentlichungstag der Anmeldung: 06.03.2013
(73) Patentinhaber: Hundegger, Hans, 87749 Hawangen (DE)
(72) Erfinder: Hundegger, Hans, 87749 Hawangen (DE)
(74) Vertreter: Charrier Rapp & Liebau

(56) Entgegenhaltungen:
- DE-A1- 3 143 867
- DE-U- 7 320 344
- DE-U1- 8 004 412
- DE-U1- 20 203 488
- DE-U1- 29 701 963
- IT-B- 1 213 903
- US-A- 2 135 763
- US-A- 5 415 274
- US-B1- 6 186 732

## Beschreibung

### Die Erfindung betrifft eine Holzbearbeitungsanlage nach dem Oberbegriff des Patentanspruchs 1.

Aus der DE 202 03 488 U1 ist eine Holzbearbeitungsanlage bekannt, bei der die Bewegung des Werkstücks durch eine Riemenanordnung mit einem über Umlenkrollen geführten Riemen bzw. Band erfasst wird. Hier ist parallel zu einem für den Transport der Werkstücke bestimmten Antriebsband ein Messriemen über mehrere voneinander getrennte Riemenscheiben geführt. An der Rückseite des Messriemens sind zur Werkstückseite hin auf Federn gelagerte, flächige Andruckschienen angeordnet. Durch diese federbeaufschlagten Andruckschienen wird der Messriemen von der Innenseite gegen das Werkstück gedrückt. Da jedoch der Messriemen an den stationären Andruckschienen entlang bewegt wird, ist der Messriemen aufgrund der Relativbewegung zwischen Messriemen und federbelasteter Andruckschiene und der dadurch bedingten Reibung einer hohen Belastung ausgesetzt, was zu einem schnelleren Verschleiß des Messriemens und zu einem Schlupf führen kann.

Um diesen Nachteil zu vermeiden, ist aus der DE 31 43 867 A1 zudem bekannt, dass die Andruckvorrichtung mehrere Andruckelemente umfassen kann, die mit der Riemenanordnung in dessen Bewegungsrichtung mitbewegt werden. Die dort gezeigte Andruckvorrichtung weist einen Zahnriemen auf, der mittels Rollenlager gegenüber einem Maschinengestell gelagert ist und dessen Zähne Andruckelemente bilden, die gegen die Riemenanordnung gedrückt werden. Die Zähne des Zahnriemens bewegen sich dabei in Bewegungsrichtung der Riemenanordnung.

Aufgabe der Erfindung ist es, eine Holzbearbeitungsanlage der eingangs genannten Art zu schaffen, die auf möglichst reibungsarme Weise einen schlupffreien Andruck des Riemens bzw. der Kette an das zu bewegende Werkstück ermöglicht.

Diese Aufgabe wird durch eine Holzbearbeitungsanlage mit den Merkmalen des Anspruchs 1 gelöst. Zweckmäßige Weiterbildungen und vorteilhafte Ausführungsformen der Erfindung sind Gegenstand der Unteransprüche.

Bei der erfindungsgemäßen Holzbearbeitungsanlage sind die Umlenkscheiben und die Andruckvorrichtung an einem Träger angeordnet und über diesen Träger vertikal beweglich. Dadurch kann eine Anstellung an das Werkstück erreicht werden.

Zudem sind die Andruckelemente durch innere Kettenlaschen zu einer Endloskette miteinander verbunden und über mindestens zwei Kettenumlenkräder geführt. Die beiden in einer Ebene liegenden Kettenumlenkräder sind zweckmäßigerweise in einer Ebene zwischen zwei oberen Umlenkscheiben des Riemens derart angeordnet, dass die Andruckelemente zur Anlage an der Innenseite des zwischen den beiden Umlenkscheiben verlaufenden Trums des Riemens gelangen..

Des Weiteren werden die Andwckelemente durch eine Druckplatte gegen die Innenseite des Riemens gedrückt. Die Druckplatte kann zwischen den Kettenumlenkrädern angeordnet sein und ist derart ausgeführt, dass die Andruckelemente beim Überlauf über die Druckplatte gegen die Innenseite des Riemens gedrückt werden und diesen z.B. an die Unterseite eines Werkstücks anpressen. Hierzu kann die Druckplatte einen rampenförmigen Verlauf aufweisen. Die Druckplatte ist um eine horizontale Achse schwenkbar. Dadurch können die Andruckelemente auch an unregelmäßige Werkstücke gut angedrückt werden. Zudem umfassen die Andruckelemente einen U-förmigen Grundkörper mit einem oberen Andruckteil und zwei nach unten ragenden Schenkeln, durch die zwei Achsen mit beidseitig drehbar gelagerten Rollen verlaufen, wobei auf den Enden der Achsen äußere Kettenlaschen zur Halterung der Rollen sitzen.

Um eine möglichst geringe Reibung zwischen den Andruckelementen und der Druckplatte zu erreichen, sind an den Andruckelementen oder auch an den Verbindungselementen zwischen den Andruckelementen drehbar gelagerte Rollen zur Auflage an der Druckplatte angeordnet.

In einer besonders zweckmäßigen Ausgestaltung ist der Riemen über zwei in einer Ebene angeordnete Umlenkscheiben und eine dritte Umlenkscheibe geführt, wobei die dritte Umlenkscheibe am freien Ende einer schwenkbar gelagerten Schwinge angeordnet sein kann. Die vorstehend beschriebene Riemen- oder Kettenanordnung ist vorzugsweise zur Erfassung der Bewegung eines Werkstücks an einer Plattenbearbeitungsanlage, einer Abbundanlage oder einer ähnlichen Holzbearbeitungsanlage einsetzbar. Hierzu wird der Riemen oder die Kette durch die mit diesen mitbewegte Andruckelemente z.B. an die Unterseite eines auf einer Werkstückauflage in Längsrichtung bewegten Werkstücks angedrückt. An mindestens einer der Umlenkscheiben des Riemens kann ein Sensor oder eine andere geeignete Einrichtung zur Erfassung deren Drehbewegung angeordnet sein. Durch Erfassung der Drehbewegung der vom Werkstück über den Riemen bzw. eine Kette angetriebenen Umlenkscheibe kann so die Bewegung des Werkstücks erfasst und schlupffrei gemessen werden. Die Bewegung des Riemens oder der Kette kann aber auch direkt durch andere geeignete Messeinrichtungen erfasst werden. So könnte z.B. auch die Anzahl der an einem geeigneten Detektor vorbeilaufenden Zähne eines Zahnriemens erfasst und zur direkten Messung der Riemenbewegung verwendet werden. Auch andere Messeinrichtungen zur Erfassung der Riemen- oder Kettenbewegung wären geeignet.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine erfindungsgemäße Riemenanordnung in einer Perspektive;
- **Figur 2**: die Riemenanordnung von Figur 1 in einer Seitenansicht;
- **Figur 3**: ein Andruckelement in einer Seitenansicht;
- **Figur 4**: ein Andruckelement in einer Perspektive.

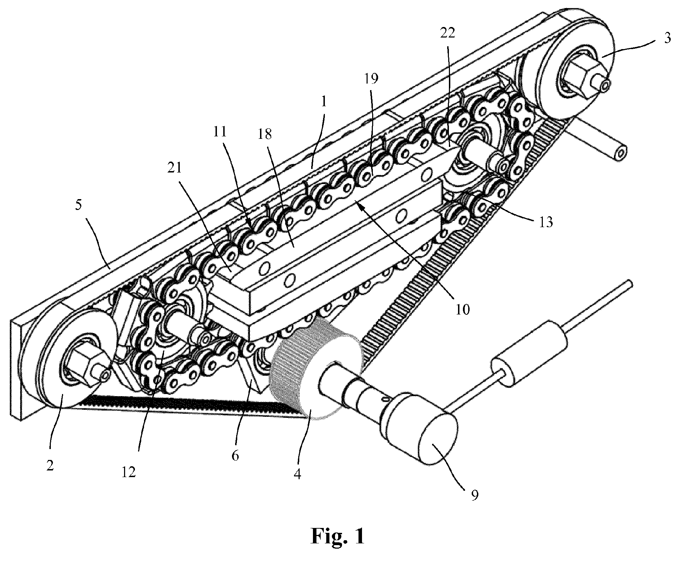

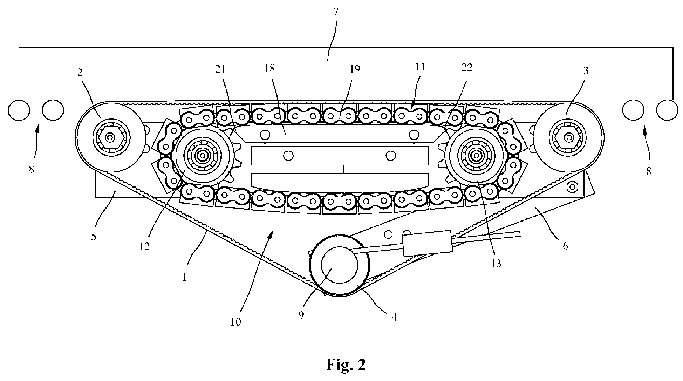

Die in den Figuren 1 und 2 in unterschiedlichen Ansichten dargestellte Riemenanordnung enthält einen hier als Endlos-Zahnriemen ausgebildeten Riemen 1, der um zwei in einer Ebene liegende obere Umlenkscheiben 2 und 3 sowie um eine unterhalb der beiden Umlenkscheiben 2 bzw. 3 angeordnete untere Umlenkscheibe 4 geführt ist. Die beiden oberen Umlenkscheiben 2 und 3 sind an einer Tragschiene 5 drehbar gelagert, während die untere Umlenkscheibe 4 am freien Ende einer an der Tragschiene 5 schwenkbar angeordneten Schwinge 6 drehbar gelagert ist. Die Schwinge 6 kann durch eine nicht gezeigte Feder vorgespannt sein oder kann zum gespannten Führen des Riemens 1 durch ihr Eigengewicht nach unten gedrückt werden.

Die oberen Umlenkscheiben 2 und 3 sowie die untere Umlenkscheibe 4 sind als Zahnscheiben zum formschlüssigen Eingriff mit dem hier als Endlos-Zahnriemen ausgebildeten Riemen 1 ausgeführt. Die Riemenanordnung ist derart ausgestaltet, dass der zwischen den beiden oberen Umlenkscheiben 2 und 3 verlaufende Bereich bzw. Trum des Riemens 1 mit seiner Außenseite zumindest teilweise zur Anlage an der Unterseite eines in Figur 2 schematisch dargestellten Werkstücks 7 gelangt. Das z.B. als Holzbalken, Holzplatte oder dgl. ausgeführte Werkstück 7 liegt auf einer hier durch Transportwalzen schematisch angedeuteten Rollenbahn oder einer anderen geeigneten Werkstückauflage 8 einer Plattenbearbeitungsanlage oder einer ähnlichen Holzbearbeitungsanlage auf und kann zur Bearbeitung durch eine hier nicht dargestellte Transportvorrichtung entlang der Werkstückauflage 8 transportiert werden. Bei der Bewegung des Werkstücks 7 in Richtung seiner Längsachse wird der Riemen 1 durch reibschlüssige Anlage an der Unterseite des Werkstücks 7 mitgenommen und kann zur Erfassung der Bewegung des Werkstücks 7 eingesetzt werden.

Die Riemenanordnung ist bei dem gezeigten Ausführungsbeispiel also Teil einer Messeinrichtung zur Erfassung der Bewegung des in Längsrichtung bewegten Bauteils 7, wobei hier die untere Umlenkscheibe 4 mit einem Drehgeber oder einem anderen geeigneten Sensor 9 zur Erfassung der Drehbewegung der Umlenkscheibe 4 verbunden ist. Durch Erfassung der Drehbewegung der vom Werkstück 7 über den Riemen 1 angetriebenen Umlenkscheibe 4 kann so die Bewegung des Werkstücks 7 erfasst werden. Der Sensor 9 könnte auch an den anderen Umlenkscheiben 2 und 3 angebracht sein.

Um eine möglichst schlupffreie Mitnahme des Riemens 1 bei der Bewegung des Werkstücks 7 zu erreichen, wird der Riemen 1 durch eine Andruckvorrichtung 10 gegen das Werkstück 7 gedrückt. Die Andruckvorrichtung 10 umfasst mehrere in Transportrichtung des Riemens 1 mit diesem mitbewegte Andruckelemente 11, die bei der gezeigten Ausführung Teil einer um zwei Kettenumlenkräder 12 und 13 geführten Endloskette sind. Bei der gezeigten Ausführung sind die Kettenumlenkräder 12 und 13 als Zahnräder ausgeführt.

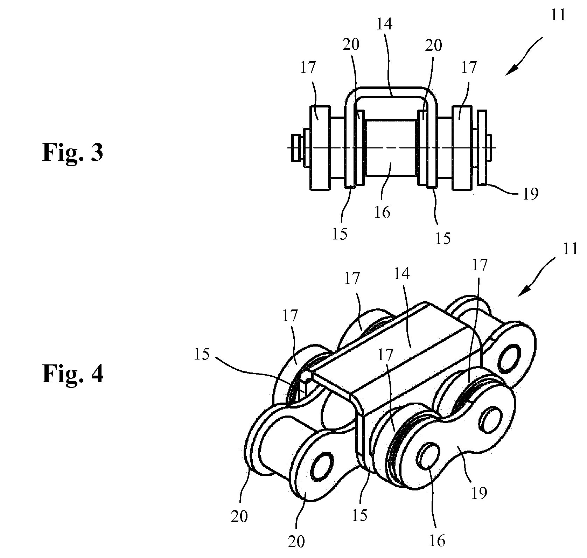

Die in den Figuren 3 und 4 gesondert dargestellten Andruckelemente 11 bestehen aus einem U-förmigen Grundkörper mit einem oberen Andruckteil 14 und zwei nach unten ragenden Schenkeln 15, durch die zwei Achsen 16 mit beidseitig drehbar gelagerten Rollen 17 zur Auflage auf einer in den Figuren 1 und 2 gezeigten Druckplatte 18 verlaufen. Durch eine auf den Enden der Achsen 16 sitzende äußere Kettenlasche 19 werden die Rollen 17 gehalten. Die Andruckelemente 11 sind durch in Figur 3 dargestellte innere Kettenlaschen 20 zu der über die Kettenumlenkräder 12 und 13 geführten Endloskette miteinander verbunden.

Durch die an den Achsen 16 beidseitig des Andruckelements 11 angeordneten Rollen 17 gleiten die Andruckelemente 11 möglichst reibungs- und verschleißfrei auf der Druckplatte 18. Die zwischen den Kettenumlenkrädern 12 und 13 angeordnete Druckplatte 18 ist derart ausgeführt, dass die Andruckelemente 11 beim Überlauf über die Druckplatte 18 gegen den Riemen 1 gedrückt werden und diesen an die Unterseite des Werkstücks 7 anpressen. Hierzu weist die Druckplatte 18 einem rampenförmigen Verlauf mit einer in Bewegungsrichtung der Andruckelemente 11 schräg zu den Andruckelementen 11 hin ansteigenden vorderen Rampenfläche 21 und einer schräg abfallenden hinteren Rampenfläche 22 auf.

Bei der gezeigten Ausführung wird die vorstehend beschriebene Riemenanordnung zur Messung der Bewegung eines Werkstücks an einer Plattenbearbeitungsanlage oder einer ähnlichen Holzbearbeitungsanlage eingesetzt. Die Riemenanordnung ist in eine Transportbahn oder eine andere Werkstückauflage der Holzbearbeitungsanlage so integriert, dass der obere Trum des Riemens 1 z.B. zur Anlage an der Unterseite des auf der Transportbahn aufliegenden und in Längsrichtung transportierten Werkstücks 7 gelangt. Selbstverständlich kann der Riemen auch an anderen Seitenflächen des Werkstücks 7 zur Anlage gelangen. Wird das Werkstück 7 durch eine hier nicht dargestellte Transportvorrichtung in Längsrichtung bewegt, wird der durch die Andrückelemente 11 an die Unterseite des Werkstücks 7 angedrückte Riemen 1 aufgrund der Reibung mitgenommen und überträgt seine Bewegung auf die Umlenkscheibe 4, an welcher der Sensor 9 zur Erfassung der Drehbewegung der Umlenkscheibe 4 angeordnet ist. Dadurch kann die Bewegung des Werkstücks erfasst und gemessen werden. Da sich die Andrückelemente 11 zusammen mit dem Riemen 1 bewegen und keine Relativbewegung zwischen Andrückelementen 11 und Riemen 1 erfolgt, tritt keine Gleitreibung zwischen den Andrückelementen 11 und dem Riemen 1 auf.

Die vorstehend beschriebene Riemenanordnung ist nicht auf den ausführlich erläuterten Einsatzzweck beschränkt. So könnte die Riemenanordnung auch zum Transport eines Werkstücks eingesetzt werden, wenn z.B. einer oder mehrere der Umlenkscheiben angetrieben wird. Gleichzeitig kann auch hier eine Messung der Bewegung des Werkstücks erfolgen. Anstelle des Riemens 1 könnte außerdem auch eine Kette oder ähnliche Zugelemente verwendet werden, die über die vorstehend beschriebene Andruckvorrichtung 10 an das Werkstück 7 angedrückt werden und durch geeignete Reib- oder Formschlusselemente in schlupffreie Verbindung mit dem Werkstück 7 gelangen.

## Patentansprüche

1. Holzbearbeitungsanlage mit einer Werkstückauflage (8) und einer Riemen- oder Kettenanordnung zur Erfassung der Bewegung eines auf der Werkstückauflage (8) aufliegenden und zur Bearbeitung transportierten Werkstücks (7), wobei die Riemen- oder Kettenanordnung einen bzw. eine über mindestens zwei Umlenkscheiben (2, 3) geführten und zur Anlage an dem Werkstück (7) ausgebildeten Riemen (1) bzw. Kette umfasst, der bzw. die durch eine dem Riemen (1) bzw. der Kette zugeordnete Andruckvorrichtung (10) quer zur Bewegungsrichtung des Riemens (1) bzw. der Kette gegen das Werkstück (7) andrückbar ist, wobei die Andruckvorrichtung (10) mehrere mit dem Riemen (1) bzw. der Kette in deren Bewegungsrichtung mitbewegte Andruckelemente (11) umfasst, **dadurch gekennzeichnet, dass** die Umlenkscheiben (2, 3) und die Andruckvorrichtung (10) an einem vertikal beweglichen Träger (5) angeordnet sind und die Andruckelemente (11) durch innere Kettenlaschen (20) zu einer Endloskette miteinander verbunden und über mindestens zwei Kettenumlenkräder (12, 13) geführt sind, wobei an den Andruckelementen (11) drehbar gelagerte Rollen (17) angeordnet sind, die Andruckelemente (11) durch eine Druckplatte (18) gegen die Innenseite des Riemens (1) gedrückt werden und die Andruckelemente (11) einen U-förmigen Grundkörper mit einem oberen Andruckteil (14) und zwei nach unten ragenden Schenkeln (15) umfassen, durch die zwei Achsen (16) mit beidseitig drehbar gelagerten Rollen (17) verlaufen, wobei auf den Enden der Achsen (16) äußere Kettenlaschen (19) zur Halterung der Rollen (17) sitzen.

2. Holzbearbeitungsanlage nach Anspruch 1, **dadurch gekennzeichnet, dass** die Kettenumlenkräder (12, 13) zwischen den Umlenkscheiben (2, 3) des Riemens (1) angeordnet sind.

3. Holzbearbeitungsanlage nach Anspruch 1 oder 2, **dadurch gekennzeichnet, dass** der Riemen bzw. die Kette über zwei in einer Ebene angeordnete Umlenkscheiben (2, 3) und eine dritte Umlenkscheibe (4) geführt ist.

4. Holzbearbeitungsanlage nach Anspruch 3, **dadurch gekennzeichnet, dass** die dritte Umlenkscheibe (4) am freien Ende einer schwenkbar gelagerten Schwinge (6) angeordnet ist.

5. Holzbearbeitungsanlage nach einem der Ansprüche 1 bis 4, **dadurch gekennzeichnet, dass** an mindestens einer der Umlenkscheiben (4) ein Sensor (9) zur Erfassung der Drehbewegung der Umlenkscheibe (4) angeordnet ist.

6. Holzbearbeitungsanlage nach einem der Ansprüche 1 bis 5, **dadurch gekennzeichnet, dass** an dem Riemen (1) bzw. der Kette ein Sensor zur Erfassung der Bewegung des Riemens (1) bzw. der Kette angeordnet ist.

7. Holzbearbeitungsanlage nach einem der Ansprüche 1 bis 6, **dadurch gekennzeichnet, dass** die Druckplatte (18) um eine horizontale Achse schwenkbar ist.

## Claims

1. Wood working machine with a workpiece support (8) and a belt or chain arrangement for detecting the movement of a workpiece (7) lying on the workpiece support (8) and being transported for machining, wherein the belt or chain arrangement comprises a belt (1) or chain guided over at least two deflecting pulleys (2, 3) and configured to bear on the workpiece (7), which belt or chain can be pressed against the workpiece (7) by a contact pressure device (10) cooperating with the belt (1) or the chain transversely to the direction of movement of the belt (1) or the chain, wherein the contact pressure device (10) comprises a plurality of contact pressure elements (11) entrained with the belt (1) or the chain in the direction of movement thereof, **characterised in that** the deflecting pulleys (2, 3) and the contact pressure device (10) are arranged on a carrier (5) which is moveable vertically and the contact pressure elements (11) are connected with one another by inner chain link plates (20) forming an endless chain and are guided over at least two chain deflecting sprockets (12, 13), wherein rotatably mounted rollers (17) are arranged on the contact pressure elements (11), the contact pressure elements (11) are pressed against the inside of the belt (1) by a pressure plate (18) and the contact pressure elements (11) comprise a U-shaped base body with an upper contact pressure part (14) and two downwardly projecting limbs (15) through which run two pins (16) with rotatably mounted rollers (17) on both sides, wherein outer chain link plates (19) are seated on the ends of the pins (16) to retain the rollers (17).

2. Wood working machine according to claim 1, **characterised in that** the chain deflecting sprockets (12, 13) are arranged between the deflecting pulleys (2, 3) of the belt (1).

3. Wood working machine according to claim 1 or 2, **characterised in that** the belt or the chain is guided over two deflecting pulleys (2, 3) arranged in one plane and a third deflecting pulley (4).

4. Wood working machine according to claim 3, **characterised in that** the third deflecting pulley (4) is arranged at the free end of a pivotally mounted arm (6).

5. Wood working machine according to one of claims 1 to 4, **characterised in that** a sensor (9) is arranged on at least one of the deflecting pulleys (4) to detect the rotating movement of the deflecting pulley (4).

6. Wood working machine according to one of claims 1 to 5, **characterised in that** a sensor is arranged on the belt (1) or the chain to detect the movement of the belt (1) or the chain.

7. Wood working machine according to one of claims 1 to 6, **characterised in that** the pressure plate (18) is able to pivot about a horizontal axis.

## Revendications

1. Installation d'usinage de bois comprenant un support de pièce à usiner (8) et un ensemble de courroies ou de chaînes pour détecter le déplacement d'une pièce à usiner (7) reposant sur le support de pièce à usiner (8) et transportée aux fins de l'usinage, dans laquelle l'ensemble de courroies ou de chaînes comprend une courroie (1) ou une chaîne guidée par l'intermédiaire d'au moins deux poulies de renvoi (2, 3) et réalisée aux fins de l'appui au niveau de la pièce à usiner (7), laquelle courroie ou chaîne peut être comprimée contre la pièce à usiner (7) par un dispositif de compression (10) associé à la courroie (1) ou à la chaîne de manière transversale par rapport à la direction de déplacement de la courroie (1) ou de la chaîne, dans laquelle le dispositif de compression (10) comprend plusieurs éléments de compression (11) entraînés en déplacement avec la courroie (1) ou la chaîne dans la direction de déplacement de celle-ci, **caractérisée en ce que** les poulies de renvoi (2, 3) et le dispositif de compression (10) sont disposés au niveau d'un support (5) mobile de manière verticale, et les éléments de compression (11) sont reliés les uns aux autres par des brides de chaîne (20) afin de former une chaîne sans fin et sont guidés par l'intermédiaire d'au moins deux roues de renvoi de chaîne (12, 13), dans laquelle des galets (17) montés de manière à pouvoir tourner sont disposés au niveau des éléments de compression (11), les éléments de compression (11) sont pressés par une plaque de pression (18) contre le côté intérieur de la courroie (1) et les éléments de compression (11) comprennent un corps de base en forme de U pourvu d'une partie de compression (14) supérieure et de deux branches (15) dépassant vers le bas, à travers lesquelles s'étendent deux axes (16) avec des galets (17) montés de part et d'autre de manière à pouvoir tourner, dans laquelle des brides de chaîne (19) extérieures pour maintenir les galets (17) reposent sur les extrémités des axes (16).

2. Installation d'usinage de bois selon la revendication 1, **caractérisée en ce que** les roues de renvoi de chaîne (12, 13) sont disposées entre les poulies de renvoi (2, 3) de la courroie (1).

3. Installation de traitement de bois selon la revendication 1 ou 2, **caractérisée en ce que** la courroie ou la chaîne est guidée par l'intermédiaire de deux poulies de renvoi (2, 3) disposées dans un plan et d'une troisième poulie de renvoi (4).

4. Installation de traitement de bois selon la revendication 3, **caractérisée en ce que** la troisième poulie de renvoi (4) est disposée au niveau de l'extrémité libre d'une manivelle (6) logée de manière à pouvoir pivoter.

5. Installation de traitement de bois selon l'une quelconque des revendications 1 à 4, **caractérisée en ce qu'**un capteur (9) pour détecter le déplacement en rotation de la poulie de renvoi (4) est disposé au niveau au moins d'une des poulies de renvoi (4).

6. Installation de traitement de bois selon l'une quelconque des revendications 1 à 5, **caractérisée en ce qu'**un capteur pour détecter le déplacement de la courroie (1) ou de la chaîne est disposé au niveau de la courroie (1) ou de la chaîne.

7. Installation d'usinage de bois selon l'une quelconque des revendications 1 à 6, **caractérisée en ce que** la plaque de pression (18) peut être pivotée autour d'un axe horizontal.
